# EUROPEAN PATENT APPLICATION

(11) **EP 3 354 389 A1**
(43) Date of publication of application: **01.08.2018**
(21) Application number: 17153793.9
(22) Date of filing: 30.01.2017
(51) Int. Cl.: B23C 3/30, B23B 5/36, B23F 5/16, B23Q 27/00, B23C 5/08, B23C 5/14, B23C 3/32, B23C 5/22, B23D 15/14

(54) **METHOD FOR MACHINING BALL TRACKS OF CONSTANT VELOCITY JOINTS**

(71) Applicant: Sandvik Intellectual Property AB, 811 81 Sandviken (SE)
(72) Inventor: SJÖÖ, Sture, 805 92 GÄVLE (SE); HUPFER, René, DE-70806 KORNWESTHEIM (DE)
(74) Representative: Sandvik

(57) **Abstract**

The present specification relates to a method for machining of ball tracks of an inner race of a constant velocity joint comprising the steps of providing a power skiving tool (1) having a plurality of cutting members and a first axis of rotation (Rₜ₁), and a work piece (20) comprising an outer envelope surface (21) extending along an axis of rotation (R_{wp}), such that said first axis of rotation of said power skiving tool is arranged at a first distance from said axis of rotation of the work piece and oriented at a first angle (α) relative one another, applying a first rotational speed to said power skiving tool and a second rotational speed to said work piece and a relative movement between said work piece and said power skiving tool such that said cutting members engage said outer envelope surface to machine the ball tracks (22). The present specification also relates to a cutting insert and a power skiving cutting tool.

## Description

### Field of the invention

The present invention generally relates to the field of machining of constant velocity joints. In particular, the present invention relates to machining of ball tracks of inner races of constant velocity joints.

### Technical background

Constant velocity joints are joints transmitting a rotational movement from an input shaft to an output shaft at constant rotational velocity more or less regardless of the angle between the input- and output shaft. Such joints may provide such a functionality by means of for example an inner and an outer housing having a number of balls arranged in races there between. The races may be split into an inner race and an outer race respectively arranged in the inner and outer housing, such that the inner and outer housing, being attached to the input- and output shaft respectively, may rotate about their respective axis of rotation while assuming an angle with respect to one another.

Such a ball and race design put high demands on tolerances and surface quality of the comprised parts and therefore on the machining processes used during manufacturing of the joints. In the field of machining of constant velocity joints, it is therefore commonly known to utilize complicated multistage processes in order to produce such ball tracks having a desired quality. Some examples of utilized methods include processes involving removal of material such as milling or grinding, or forming methods such as forging.

For example, DE102007031695, filed by the applicant of the present application discloses a method of milling ball races and a side milling cutter for machining of ball races of for example constant velocity joints, elucidating the complexity of such a process.

Accordingly, the use of such multi-stage machining approaches adds considerably to the complexity of the milling operation and also to manufacturing time required to perform the multi-stage milling operation.

In order to alleviate some of these drawbacks, solutions have been proposed introducing special tools and machines for providing improved efficiency. Especially with regards to producing the inner race for the balls, in many cases complex machines specifically designed for this purpose are used. For example, US2006/0283016 discloses a device for machining of such races wherein one ball track and at least one guiding web (arranged between the tracks) are machined simultaneously utilizing a number of rotating tools. Another attempt is disclosed by US 7,735,210 B disclosing a similar device by means of which ball races are produced utilizing a plurality of simultaneously rotating tools.

Apart from the complexity and costs added using such special purpose machines, the efficiency of such processes tend to be less than desired. Hence, there is a need for improvement in terms of efficiency of machining and shortening of production times in the field, while at the same time providing the same or possibly higher, quality of the produced ball tracks.

### Summary of the invention

Accordingly, it is an object of the present invention to provide an improved method for machining of ball tracks of inner races of constant velocity joints. In particular, it is an object to provide such an improved method adapted to reduce the machining time required as compared to the prior art. These objects are achieved by a method as defined in independent claim 1, a cutting insert adapted to be replaceably arranged along a periphery of a tool body of a power skiving cutting tool for machining of ball tracks of inner races of constant velocity joints as defined in independent claim 6 and a power skiving cutting tool for machining of ball tracks of inner races of constant velocity joints as defined in independent claim 12. Preferred embodiments are defined in the dependent claims.

According to one aspect of the invention, a method for machining of ball tracks of an inner race of a constant velocity joints is provided. The method comprises the steps of providing a power skiving tool comprising a tool body and a plurality of cutting members arranged along a periphery of the tool body, each of the cutting members comprising a cutting edge, the power skiving tool further having a first axis of rotation, providing a work piece comprising an outer envelope surface extending along an axis of rotation R_{wp} of the work piece, arranging the power skiving tool and the work piece such that the first axis of rotation Rₜ₁ of the power skiving tool is arranged at a first distance D1 from the axis of rotation of the work piece along a radial direction of the work piece perpendicular to the axis of rotation of the workpiece and further such that the first and workpiece axis of rotation are oriented at a first angle α relative one another; applying a first rotation to the power skiving tool, the first rotation having a first rotational speed and applying a second rotation to the work piece, the second rotation having a second rotational speed, wherein the first and second rotational speeds are synchronized and applying a relative movement between the work piece and the power skiving tool along a direction parallel to the axis of rotation of the work piece, such that the cutting edges of the cutting members engage the outer envelope surface of the work piece by means of a combined relative translational and rotational movement to machine the ball tracks in the outer envelope surface along the axis of rotation of the work piece.

According to the first aspect, the method provides an inventive solution to the objects described above derived from the realization that the desired improvements may be provided by utilizing a power skiving tool adapted for machining of inner races and machining the races, or tracks, utilizing a synchronized rotation and relative axial movement between the work piece and the tool.

The cutting edges of cutting members arranged along the periphery of the tool body thereby engage the outer surface of the work piece by means of a rotational- and translational movement, thereby cutting the inner races, or ball tracks, faster and more efficient than the known prior art.

This is for example due to the continuous nature of the cutting process which enables all machining to be carried out in a single setup and allows for very short production times as compared to commonly utilized methods in the art, thus offering high flexibility and efficiency as well as improved quality.

The ball tracks are to be machined in the outer envelope surface along the axis of the workpiece. The wording along the axis of the workpiece should in the context of this application be interpreted as substantially in parallel to the axis of the workpiece. However, the extension of the ball tracks may in some cases comprise a small radial component. This may be the case for a workpiece exhibiting so called crowning. Further, embodiments are conceivable in which the ball tracks may have a somewhat helical shape. Accordingly, the ball tracks may in some embodiments extend in parallel to said direction, whereas the tracks in other embodiment may comprise portions that do not extend strictly in parallel with the axis of the workpiece.

Further, ball tracks achievable by the present method, may comprise any continuously curved cross sectional shape where examples include so called radius or elliptic cross sectional shapes or ball track geometries.

Further, the term "synchronized" as used above is commonly to be understood as synchronized "by a ratio", i.e. the synchronization of rotational speeds is a synchronization by ratio. For example, the ratio between the first and second rotational speed depends on the relation between the diameter of the power skiving tool and the workpiece. However, in a very specific case when the diameters on the tool and workpiece are the same, "synchronized" could refer also to the same first and second rotational speed

This applies throughout the application, i.e. to any of the disclosed combinations of synchronized rotational speeds, i.e. the first and second rotational speeds, the third and fourth rotational speeds and/or the second and fifth rotational speeds. This ratio is set to a suitable value depending on the application in which the embodiment in questions is used.

Similarly, with regards to the feed/revolution of the different tools described, this should also be set to a suitable value depending on the application in which the embodiment in questions is used.

According to one embodiment, the method may be a method for machining the ball tracks by mean of multiple passes of the power skiving tool, comprising the steps of arranging the power skiving tool and the work piece such that the first axis of rotation of the power skiving tool is arranged at a first distance D2 from the axis of rotation of the work piece along the radial direction of the work piece, wherein the second distance is smaller than the first distance (D2<D1), and applying at least one additional relative movement between the work piece and the power skiving tool along the direction parallel to the axis of rotation of the work piece, such that the cutting edges of the tool engage the ball tracks in said outer envelope surface of the work piece by means of a combined relative translational and rotational movement, thereby achieving a larger depth on the ball tracks in the radial direction of the workpiece.

Such an embodiment, utilizing one or more additional passes of the tool thereby achieving a multi stage process, may be advantageous in that the total depth of the inner ball track races may be larger when achieved using multiple passes of the tool. For some applications however, one pass of the skiving tool may be sufficient. Such applications include for example finishing power skiving. Accordingly, in some embodiments the method for machining of ball tracks of inner races of constant velocity joints is a method for finishing of ball tracks of inner races of constant velocity joints. Such an operation may advantageously be applied for example after heat treatment of the work piece and may further constitute a further additional step of a method within the scope of the present application.

According to one embodiment, the method further comprises the steps of providing a second power skiving cutting tool for machining internal splines of the inner race of the constant velocity joint, the second power skiving tool comprising a plurality of cutting members arranged along a periphery of the second power skiving tool, each of the cutting members comprising a cutting edge, the second power skiving tool having a second axis of rotation, arranging the second power skiving tool and the work piece such that the second axis of rotation of the second power skiving tool is arranged at a third distance from the axis of rotation of the work piece along the radial direction of the work piece and further such that the axis of rotation of workpiece and second axis of rotation are oriented at a second angle α₂ relative one another, applying a third rotation to the second power skiving tool, the third rotation having a third rotational speed, applying a fourth rotation to the work piece, the fourth rotation having a fourth rotational speed, wherein the third and fourth rotational speeds are synchronized and applying a relative movement between the work piece and the second power skiving tool along a direction parallel to the axis of rotation of the work piece, such that the cutting edges of the cutting members of the second power skiving tool engage an inner surface of the work piece by means of a combined relative translational and rotational movement to machine the internal splines in the inner surface along the axis of rotation of the work piece.

Accordingly, using such a further step the inner splines may be machined in a step for example following, or preceding, the machining of the ball tracks. Such a method may be advantageous for example in that the ball tracks as well as the inner races may be machined successively without removing the work piece from the machine, thereby reducing complexity and time requirements for the complete process.

The rotational speeds of the first and second power skiving tool respectively may in some embodiments be different, i.e. the second rotational speed may differ from the fourth rotational speed. This may also in some embodiments be true with regards to the respective feed/revolution of the first and second power skiving tool respectively, i.e. the feed/revolution may be different between the first and second tool as well. This may be advantageous in that the parameters of the cutting process may be individually adapted, and thus, processing efficiency may be further improved.

According to one embodiment, the method further comprises the steps of providing an additional power skiving cutting tool, the additional tool comprising a tool body and a plurality of cutting members arranged along a periphery of the tool body, each of the cutting members comprising a cutting edge, and further having an axis of rotation Rₜₐ, arranging the additional tool and the work piece such that a center point of the additional cutting tool is arranged at a first distance Da1 from a center point of the work piece along a radial direction of the work piece, perpendicular to the axis of rotation R_{WP} and further such that the axis of rotation Rₜₐ and the second axis of rotation are oriented at an angle α relative one another, applying a fifth rotation to the additional tool, the fifth rotation having a fifth rotational speed, applying a sixth rotation to the work piece, the sixth rotation having a sixth rotational speed, wherein the sixth and fifth rotational speeds are synchronized and applying a relative movement between the work piece and the additional tool along a direction parallel to the axis of rotation of the work piece, such that the cutting members of the additional tool engage the outer surface of the work piece by means of a combined relative translational and rotational movement, thereby achieving a plurality of longitudinal tracks extending along the outer surface in a direction parallel to the axis of rotation of the work piece.

Such an embodiment is advantageous for example in that inner races having two helical dimensions may be achieved. For example, a work piece having a number of right hand helix ball tracks and a number of left hand helix ball tracks may be achieved. Such a helix may for example be inclined at an angle of 0-20°, preferably 4-12°. This type of universal joints, i.e. the type of joint in which such a workpiece may be used, are known in the art as VL-type joints.

According to one embodiment, the direction of rotation of the power skiving tools is opposite to one another. In other words, the direction of rotation of the first rotation may be opposite to the direction of rotation of the fifth rotation. Accordingly, one skiving tool may be a right hand cutter whereas the other power skiving tool may be a left hand cutter.

Further, according to one embodiment, the direction of rotation of the sixth rotation may be opposite to the direction of rotation of the second rotation. Accordingly, the direction of rotation of the work piece may be reversed between steps. In other embodiments, the sixth rotation may be equal to the second rotation.

However, in some embodiments a single tool may be used for achieving a work piece having a number of right hand helix ball tracks and a number of left hand helix ball tracks as well. Such a single tool is preferably designed such that adjacent seats (i.e. adjacent cutting members are tilted in opposite directions.

According to one embodiment, at least one of said first, second and/or third angles (α, α₂, α₃) lies in the range 20-45°. Accordingly, the angle setting of the respective tool versus the axis A of the rotational tool may lie in the range 20-45°.

Further objectives of, features of and advantages of the method described above will become apparent when studying the following detailed disclosure, the drawings and the appended claims.

According to a second aspect of the invention, a cutting insert adapted to be replaceably arranged along a periphery of a tool body of a power skiving cutting tool for machining of ball tracks of an inner race of a constant velocity joint is provided. The cutting insert comprises a rake face, a lower face opposite to the rake face and adapted to abut an insert seat of the tool body, a clearance surface extending between the rake face and the lower face, wherein a cutting edge is formed between the rake face and the clearance surface and wherein substantially the entire cutting edge is continuously curved describing an arc having a continuously varying radius with respect to a center point of said cutting insert, wherein said cutting insert has an insert width extension along a first axis and an insert length extension along a second axis, perpendicular to said first axis, and wherein said center point is positioned on the rake face at half the insert length extension and half the insert width extension.

Accordingly, the cutting edge is defined as being formed with a varying radius in relation to the center point of the insert. The skilled person realizes that such a predetermined point of reference may be positioned anywhere on the insert. The varying radius of the continuously curved cutting edge is hereby formed to match the cross sectional profile of the ball tracks being machined when the insert is mounted at specific angles in the power skiving tool. The curvature, i.e. the varying radius, can hereby be calculated using computer software (CAD/CAM) that compensates or rather provides the relevant curvature in view of the specific angles at which the insert is mounted in order to achieve the desired cross sectional profile of the ball tracks.

Further the insert may be described as having a continuously curved outer contour along the cutting edge or along the side of the insert facing away from the center of the power skiving tool when arranged on the power skiving tool, wherein the continuously curved outer contour provides the desired cross sectional profile on the ball tracks, for example the radius or elliptic ball track profile shape.

For example, according to one embodiment, the cutting insert width extension is larger than the insert length extension.

Accordingly, the cutting insert in such an embodiment, may be described as having an elongated width extension such that the outer contour is continuously curved along said varying radius of the cutting edge, wherein the length extension is defining a depth of cut, which is typically smaller in a direction outward from the axis of rotation of the power skiving tool compared to the width extension. In other words, relatively shallow profiles are machined with the cutting inserts.

The exact dimensions of the cutting edge are needless to say dependent on the application and the size of the ball tracks and balls of the joint to be manufactured. As previously mentioned, the varying radius R on the cutting edge is preferably determined by means of computer software (CAD/CAM) to calculate said varying radius in relation to the predetermined point of reference (center point) in order to achieve the desired ball track profile to be machined depending on the angles at which the cutting insert is mounted in the power skiving tool. For example, in some embodiment, the radius or elliptic ball track to be machined may lie in the range 4-25 mm, more particularly in the range 7-20 mm.

According to one embodiment, the lower face comprises a plurality of grooves, wherein a first groove is extending along said second axis and a second groove is extending along said first axis, preferably wherein the first and second groove extend to form an intersection coinciding with the center point of the cutting insert.

Such grooves are adapted to mate with corresponding ridges provided on the insert seat on the tool body, thereby providing improved stability to the engagement between the cutting insert and the seat. The inserts must be kept securely supported in the seat, since even the slightest movement (known as micro-movements) in the seat would be detrimental to the machining result and also reduce the tool life of the insert.

According to one embodiment, the cutting insert further comprises a screw hole located at the center point of the cutting insert. Such a screw hole facilitates mounting of the insert to an insert seat of a tool body comprising a corresponding hole by means of a screw. In other embodiments however, the cutting inserts may be adapted to be attached by means of for example a clamp or a wedge.

According to one embodiment, the cutting insert is an indexable cutting insert exhibiting a 180-degree rotational symmetry. Such an insert may also be described as having a two-fold rotational symmetry and is advantageous in that a user is allowed to utilize all of the indexable cutting edges, in this case two, before replacing the cutting insert.

According to one embodiment, the cutting insert further comprises a flat rear support surface such that the insert width extension may be defined along, or in parallel to, the direction defined by such a flat rear surface and/or along the edge defined between the rake face and the rear surface. This surface may further for example be adapted to abut a rear flat surface in the seat of the tool body and may for example provide a further advantageous enhancement of the radial support of the insert in the seat.

According to one embodiment, the cutting insert further comprises a flat side support surface such that the insert length extension may be defined along, or in parallel to, the direction defined by such a flat side surface and/or along the edge defined between the rake face and the flat side surface.

Further, the cutting inserts may comprise cutting edges formed in PCD material. Other examples include cutting edges formed in CBN material or carbide or other suitable wear resistant materials.

Additional objectives, advantages and features of the cutting insert conceivable within the scope of the second aspect of the invention are readily understood by the foregoing discussion referring to the first aspect of the invention and from the following detailed disclosure, the drawings and the appended claims.

According to a third aspect of the invention, a power skiving cutting tool for machining of inner races of constant velocity joints is provided. The power skiving tool comprises a tool body and a plurality of cutting members arranged along a periphery of said tool body, wherein said cutting members comprise a rake face and a cutting edge formed between said rake face and said clearance surface. The cutting edge is curved describing an arc having a continuously varying radius R with respect to a center point of said cutting member, wherein said cutting member has a width extension along a first axis and a length extension along a second axis, perpendicular to said first axis, and said center point is positioned on the rake face at half the length extension and half the width extension of the cutting member.

According to one embodiment of the power skiving tool, the cutting members are replaceable cutting inserts according to any of the embodiments described in the foregoing.

Such cutting inserts commonly comprise a lower face opposite to said rake face and adapted to abut an insert seat of the tool body and a clearance surface extending between the rake face and the lower face. In such an embodiment, a corresponding tool body may for example include a plurality of insert seats arranged equally spaced along the periphery.

In some embodiments, the insert seats may comprise a hole, adapted to axially coincide with a center hole of the insert such that a screw or similar may be arranged through both holes in order to attach an insert to the tool body. In other embodiments however, the cutting inserts may be attached by means of clamping. Further, the bottom surface of the insert seat may, in some embodiments, comprise grooves and/or ridges adapted to mate with grooves provided on the lower side of the insert.

The power skiving tool may however in other embodiments be a solid power skiving tool comprising the tool and the cutting members, i.e. comprising integrated cutting members.

The tool body of the power skiving tool may for example be a steel body. Further, the skiving tool may in some embodiments further comprise suitable fastening means for attaching the tool to the spindle providing a rotational movement to the tool, such means may be arranged for example on the opposite end of the tool as compared to the end on which the cutting members are arranged. Examples of such means include adapters and holders for mounting the power skiving tool to the spindle.

The power skiving tool may further be adapted to provide, i.e. to be used in, any rotational direction. In other words, the power skiving cutting tool may be a right hand cutter or a left hand cutter. Needless to say, the direction of rotation of the work piece is adapted accordingly.

According to one embodiment, each of said cutting members is arranged at an angle with respect to a reference plane Pᵣ perpendicular to the axis of rotation of the tool body, such that a plane defined by the rake face forms an angle β with the reference plane Pᵣ, wherein the angle β lies in the range 20-55°

In some embodiments, the angle β which may also be referred to as the inclination of the inserts may be the same as the angle α, whereas in other embodiments the angle β may differ from the angle α by approximately 0-10°.

According to one embodiment, the inclination of the cutting members may alternate between adjacent cutting members such that every second of said cutting members is arranged at an angle with respect to a reference plane Pᵣ perpendicular to the axis of rotation of the tool body, such that a plane defined by the rake face forms an angle β with the reference plane Pᵣ, and every second of said cutting members is arranged at an angle with respect to a reference plane Pᵣ perpendicular to the axis of rotation of the tool body, such that a plane defined by the rake face forms an angle -β with the reference plane Pᵣ, wherein the angle β lies in the range 20-55°. Such a design may be particularly useful for machining of helix shaped ball track inner races.

Again, objectives, advantages and features of the cutting tool conceivable within the scope of the third aspect of the invention are readily understood by the foregoing discussion referring to the first and second aspect of the invention.

Further objectives of, features of and advantages of the present invention will become apparent when studying the following detailed disclosure, the drawings and the appended claims. Those skilled in the art realize that different features of the present invention can be combined to create embodiments other than those described in the following.

### Brief description of the drawings

The invention will be better understood through the following illustrative and non-limiting detailed description of preferred embodiments, with reference to the appended drawing, on which:
Figure 1 is a perspective view of a cutting tool according to one embodiment and a work piece;
Figure 2 is a bottom view of a cutting tool according to one embodiment, particularly the insert seat and inserts;
Figure 3 is a side view of a cutting tool according to one embodiment;
Figures 4a-f are different views of a cutting insert according to one embodiment;
Figure 5 is a view from below showing a cutting tool according to one embodiment and a work piece during an exemplary stage of machining;
Figure 6 is a side view showing a cutting tool according to one embodiment and a work piece during an exemplary stage of machining;
Figures 7a and b are cross sectional views of two exemplary ball tracks achievable by means of the disclosed method;
Figure 8 shows an inner race with helix ball tracks machined by means of the disclosed method.

All figures are schematic, not necessarily to scale, and generally only show parts which are necessary in order to elucidate the invention, wherein other parts may be omitted or merely suggested.

### Detailed description of embodiments

A power skiving tool 1 according to one exemplary embodiment is shown in a perspective view along with an exemplary workpiece 2. The tool 1 comprises a tool body 10 which may be described as ring, or disc-shaped, extending along an axial direction A, coinciding with the axis of rotation Rₜ₁ of the tool, and along a radial direction R. A plurality of cutting members in the form of replaceable inserts 100 are arranged equally spaced along a periphery P of the tool body.

The illustrated tool body 10 is a steel body and is adapted to be attached the tool to a spindle providing a rotational movement to the tool, by means of an engagement by means of the center hole H.

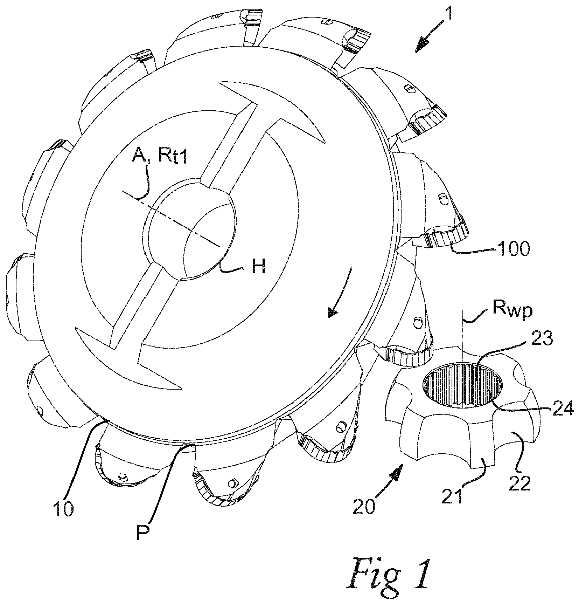

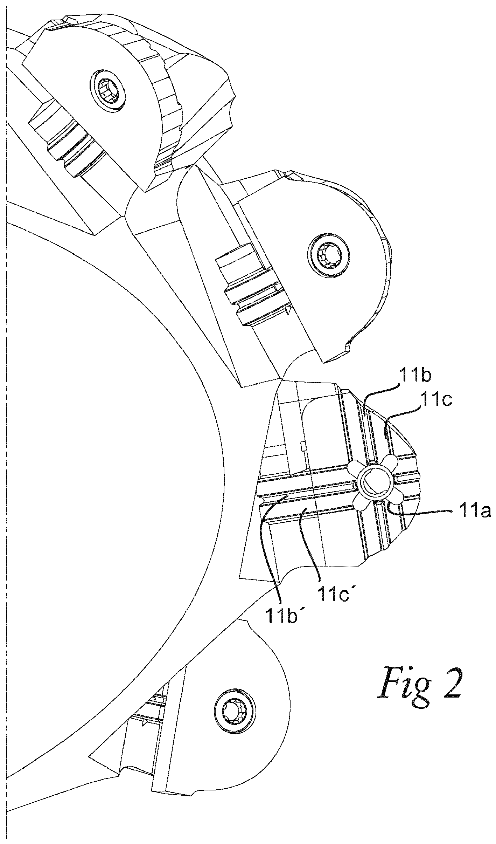

The outer diameter of the tool body of the illustrated embodiment, i.e. the diameter at the periphery of the tool body, is approximately 150 mm. Further, the illustrated exemplary embodiment of fig. 1 comprises twelve cutting inserts 100 arranged along the periphery of the tool body, the design of which will be descried in greater detail in the following. The tool body 10 therefore includes twelve insert seats 11 arranged equally spaced along the periphery, shown in more detail in fig. 2. The cutting members are removably, or replaceably, attached to the insert seats 11, in the illustrated case by means of screws (not shown).

As shown in fig 2, in the illustrated embodiment the insert seats 11 therefore each comprise a hole 11a, adapted to axially coincide with a center hole of the insert (not shown in fig. 2) such that the screw mentioned above may be inserted through both holes in order to attach the insert to the tool body. The bottom surface of the insert seat of the illustrated embodiment further comprises two sets of grooves and ridges 11b, 11c; 11b', 11c' extending perpendicularly with respect to one another and adapted to mate with corresponding grooves provided on the lower side of the insert in order to provide stability to the engagement between the insert and the seat 11.

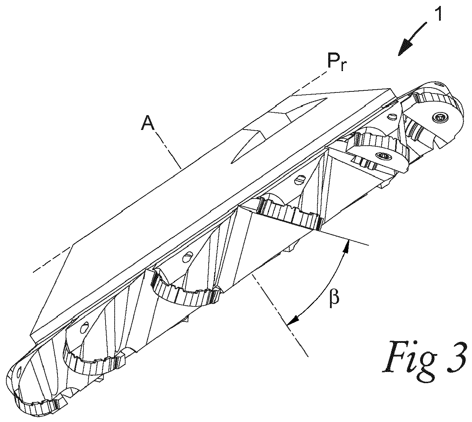

Further, turning to fig. 3 showing a side view of the insert and the work piece, in the illustrated embodiment each of the insert seats 11 are designed such that the cutting inserts are arranged having an inclination with respect to a reference plane Pᵣ, as shown in fig 3 perpendicular to the axis of rotation of the tool body, such that a plane defined by the insert, more particularly the rake face of the insert forms an angle β with the reference plane Pᵣ, in the illustrated embodiment the angle β is 50°.

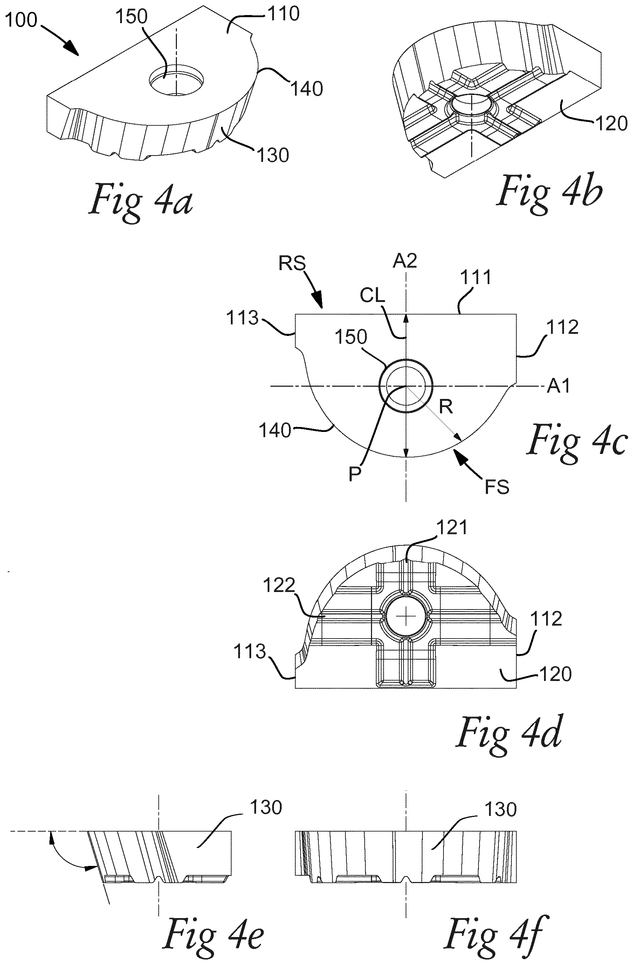

Turning to figures 4a-f, the design of an exemplary cutting insert according to an embodiment of the present specification will be described in detail.

Figures 4a and b show an upper and lower view of such a cutting insert 100. The cutting insert 100 comprises an upper face 110, i.e. a rake face 110 and a lower face 120, opposite and parallel to the rake face 110. A clearance surface 130 is formed between the rake face 110 and the lower face 120. A cutting edge 140 is formed between the rake face 110 and the clearance surface 130. Further, a through hole 150 (i.e. a screw hole 150) extends between the upper/rake and lower face 110, 120.

The general shape, or profile, of the insert 100, more particularly of the rake face 110 and the cutting edge 140 is illustrated in fig 4c, a side view of the insert showing the upper, or rake face 110. Fig. 4c further illustrates an asymmetric design feature of the insert, wherein the length of a first side portion 112 is larger than the length of a second side portion 113. A rear portion 111 of the cutting insert is adapted to face the axis of rotation of the tool body when the cutting insert is mounted in the power skiving tool.

Further, the cutting insert 100 has an insert width extension along a first axis A1 and an insert length extension along a second axis A2, perpendicular to said first axis A1. The cutting edge 140 is continuously curved describing an arc having a continuously varying radius R with respect to a predetermined point P, in the illustrated case a center point P positioned on the rake face 110 at half the insert length extension and half the insert width extension. In fig. 4c this center point P coincides with a center point of the through hole 150.

In the embodiment illustrated in fig. 4c, a center line CL extends between a front and a rear side FS, RS of the rake face. The rear side RS is a side of the insert is located closer to the rotational axis of the tool body, i.e. an opposite side compare to the front side FS of the rake face along which the cutting edge is extending. Further, the rear portion 111 of the insert along the rear side RS of the rake face also forms a flat rear surface, which extends substantially perpendicular to the rake face. Further, as may be seen in fig. 4c, the direction of extension of the first axis A1 is in the illustrated embodiment parallel to the extension of the flat rear surface/portion 111 extending between the rake face 110 and the lower face 120. Similarly, the first side portion 112 mentioned above forms a flat side surface and the direction of extension of the second axis A2 of the insert is in the illustrated embodiment parallel to the direction of the first portion or flat side surface 112 extending between the rake face 110 and the lower face 120.

Further, with regards to what may be referred to as the general shape of the insert 100 the insert width extension is larger than the insert length extension. Accordingly, the insert has a continuously curved outer contour along the cutting edge, by outer should be understood the front side of the insert facing away from the rotational axis of the power skiving tool.

In the illustrated embodiment, the insert width extension is approximately 25 mm, whereas the insert length extension is approximately 16 mm. The exact dimensions of the insert 100 is however dependent on the application and the size of the balls of the constant velocity joint to be manufactured.

Turning to fig 4d, the lower side 120 of the insert 100 is shown in detail. In the illustrated embodiment, the lower face 120 comprises a plurality of grooves and ridges, wherein a first groove 121, or first subset of grooves and ridges, extend along the first direction and a second groove 122, or second subset of grooves, extend along the second direction. As described above with reference to the insert seat 11 of the tool body 10, such grooves are adapted to mate with corresponding structures provided on the insert seat, thereby providing improved stability to the engagement between the insert and the seat.

Figures 4e and 4f are side views of the insert 100 showing the clearance surface 130, including the angle γ which in the illustrated case amounts to approximately 110° and the right angle (i.e. 90° degrees angle) at the first and second portion 112, 113.

Returning again to fig. 1, the inventive method for machining of inner races of ball tracks for constant velocity joints will now be described in greater detail.

According to one embodiment of the method a power skiving cutting tool, such as the tool 1 illustrated in fig. 1 is provided, the tool comprising a tool body 10 and a plurality of cutting members 100 arranged along the periphery of said tool body and further has an axis of rotation Rₜ₁, as indicated in fig. 1. Further, a work piece 20 is provided, the workpiece comprises an outer envelope surface 21 extending along an axis of rotation R_{wp} of the work piece.

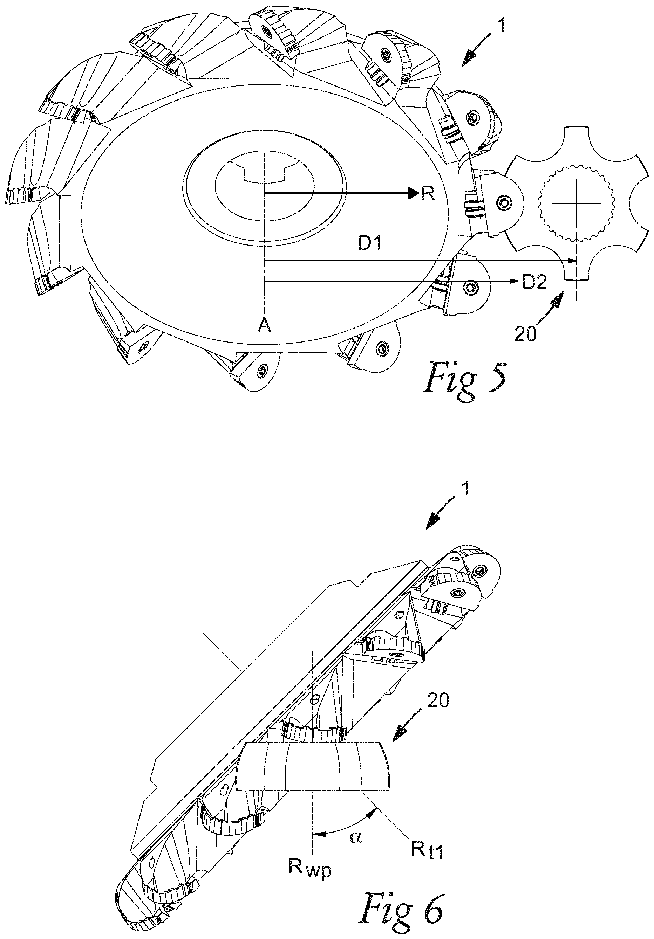

As illustrated in fig. 5, the tool 1 and the work piece 20 are then to be arranged such that said axis of rotation of said cutting tool is arranged at a first distance D1 from said axis of rotation work piece along a radial direction of said work piece perpendicular to said axis of rotation R_{wp} and further such that said first and second axis of rotation are oriented at an angle α relative one another. The angle α, i.e. the angle setting of the work piece versus the axis A of the rotational tool is in the illustrated embodiment equal to 45°, shown in fig. 6.

Further, a first rotation (i.e. a rotational movement) is applied to the tool 1, the first rotation having a first rotational speed and a second rotation is applied to the work piece 20, having a second rotational speed. The first and second rotational speeds are synchronized, more particularly synchronized by a suitable ratio.

A relative movement is then applied between the work piece 20 and the tool 1 along a direction parallel to the axis of rotation of the work piece 20, such that the cutting inserts 100 of the tool 1 engage the outer surface 21 of the work piece 20 by means of a combined relative translational and rotational movement, thereby achieving a plurality of tracks 22, i.e. inner races or tracks, extending along the envelope surface 21 along the axis of rotation R_{wp} of the work piece 20.

Accordingly, the power skiving tool 1 is designed for machining of ball tracks or inner races 22 by a synchronized rotation and relative axial movement between the work piece 20 and the power skiving tool 1, to thereby machine the inner races of ball tracks 22 faster and more efficient than the known prior art.

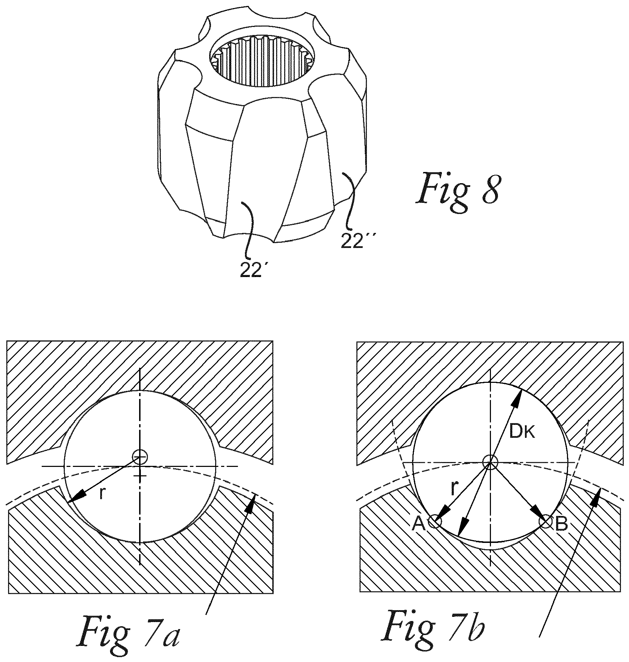

Two types of ball tracks 22 achievable by means of the described method are shown in cross section in figures 7a and 7b, wherein fig. 7a shows a so called radius profile and fig 7b shows a so called elliptic profile or geometry. The cross section of the radius ball track of fig 7a accordingly has a radius adapted to the ball radius r, and any tolerances associated, whereas the cross section of the elliptic geometry of fig. 7b may be described by means of the relationship between the ball diameter D_{K}, the ball radius r and the contact points A and B.

The work piece 20 illustrated in fig. 1, 5 and 6 constitutes an inner housing of a constant velocity joint and is shown at a stage of machining, and accordingly exhibiting a plurality of inner races 22 having an intermediate depth somewhat smaller than a desired final depth of cut and possibly also a non-finished surface finish extending along the outer envelope surface 21 as well as a plurality of internal splines 24 extending along an inner surface 23.

In order to achieve the final desired depth and possibly finish, the method may within the scope of the present application, further comprise additional steps. For example, the step of subsequently, i.e. following the first relative movement described above, arranging the power skiving tool and the work piece such that the axis of rotation of the power skiving tool is arranged at a second distance D2, exemplary illustrated in fig 5, from the axis of rotation work piece along the radial direction of the work piece. As shown in fig. 5 D2<D1, hereby by, by means of applying an additional relative movement between the work piece and the tool along a direction parallel to the axis of rotation of the work piece, such that the cutting edges of the power skiving tool now engage the tracks 22 of the work piece by means of a combined translational and rotational movement at a larger depth in the radial direction of the tracks. This step may be repeated until a desired depth of the ball tracks is achieved.

Further, an additional step of so called finishing power skiving may be utilized in order to achieve a desired surface quality. In such a case the method is commonly performed using a specifically adapted embodiment of the power skiving tool according to the present specification, performing a single pass operation over the ball tracks according to what has been described for the method above.

The inner splines 24 on the inner surface 23 may be provided by means of an additional method step for example following, or preceding, the machining of the ball tracks, wherein a second power skiving cutting tool for machining internal splines of constant velocity joints is provided and a relative movement between the work piece and the second tool is applied along a direction parallel to the axis of rotation of the work piece, such that the cutting members of the second cutting tool engage the inner surface 23 of the work piece by means of a combined relative translational and rotational movement, thereby achieving the plurality of internal longitudinal splines 24 shown for example in fig. 1 and 3.

A second exemplary work piece 20 is illustrated in fig. 8. This workpiece may constitute an inner housing of a specific type of constant velocity joint known in the art as VL-type joints, and differs from the work piece shown for example in fig. 1 in that it comprises inner races having two helical dimensions. More particularly, the work piece of fig. 8 has a number of right hand helix ball tracks 22' and a number of left hand helix ball tracks 22". Such a helix may be inclined for example 11°, 14° or 16°.

Depending on the application, such helix shaped ball track inner races may be achieved by means of the method steps described in the foregoing, albeit using a first and a second power skiving tool, normally a right hand tool and a left hand tool. Accordingly, in such a case, the right hand helix ball track inner races may be achieved by means of a first relative movement between the work piece and the first power skiving tool along a direction parallel to the axis of rotation of the work piece, such that the cutting edges of the cutting members engage the outer envelope surface of said work piece by means of a combined relative translational and rotational movement whereas the left hand ball track inner races may be achieved by means of a second relative movement between the work piece and the second power skiving tool along a direction parallel to the axis of rotation of the work piece, such that the cutting edges of the cutting members engage the outer envelope surface of said work piece by means of a second combined relative translational and rotational movement. The skilled eprson realizes that the direction of rotation of the workpiece may be suitably adapted to the direction of rotation of the resepctive power skiving tool.

However, in some cases a single tool may be used as well. Such a single tool is preferably designed such that adjacent seats (i.e. adjacent cutting members are tilted in opposite directions.

While the invention has been illustrated and described in detail in the drawings and foregoing description, such illustration and description are to be considered illustrative or exemplary and not restrictive; the invention is not limited to the disclosed embodiments. The skilled person understands that many modifications, variations and alterations are conceivable within the scope as defined in the appended claims.

Additionally, variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope of the claims.

## Claims

1. A method for machining of ball tracks of an inner race of a constant velocity joint, said method comprising the steps of:
- providing a power skiving tool (1) comprising a tool body (10) and a plurality of cutting members (100) arranged along a periphery of said tool body, each of said cutting members comprising a cutting edge, said power skiving tool further having a first axis of rotation (Rₜ₁),
- providing a work piece (20) comprising an outer envelope surface (21) extending along an axis of rotation (R_{wp}) of the work piece,
- arranging said power skiving tool and said work piece such that said first axis of rotation (Rₜ₁) of said power skiving tool is arranged at a first distance (D1) from said axis of rotation (R_{wp}) of the work piece along a radial direction of said work piece perpendicular to said axis of rotation (R_{wp}) of workpiece and further such that said first and workpiece axis of rotation (Rₜ₁, R_{wp}) are oriented at a first angle (α) relative one another;
- applying a first rotation to said power skiving tool, said first rotation having a first rotational speed and
- applying a second rotation to said work piece, said second rotation having a second rotational speed
wherein said first and second rotational speeds are synchronized and
- applying a relative movement between said work piece and said power skiving tool along a direction parallel to said axis of rotation of said work piece, such that the cutting edges of said cutting members engage said outer envelope surface of said work piece by means of a combined relative translational and rotational movement to machine the ball tracks (22) in said outer envelope surface along said axis of rotation (R_{wp}) of said work piece.

2. Method according to claim 1 for machining the ball-tracks by means of multiple passes of the power skiving tool comprising the steps of:
- arranging said power skiving tool and said work piece such that said first axis of rotation of said power skiving tool is arranged at a second distance (D2) from said axis of rotation of said work piece along said radial direction of said work piece, wherein the second distance is smaller than said first distance (D2<D1), and
- applying at least one additional relative movement between said work piece and said power skiving tool along said direction parallel to said axis of rotation of said work piece, such that the cutting edges of said cutting members engage said ball tracks in said outer envelope surface of said work piece by means of a combined relative translational and rotational movement to machine a larger depth on the ball tracks in said radial direction of said workpiece.

3. Method according to any of the preceding claims, further comprising the steps of:
- providing a second power skiving cutting tool for machining internal splines (24) of said inner race of the constant velocity joint, the second power skiving tool comprising a plurality of cutting members arranged along a periphery of said second power skiving tool, each of said cutting members comprising a cutting edge, the second power skiving tool having a second axis of rotation (Rₜ₂),
- arranging said second power skiving tool and said work piece such that said second axis of rotation of said second power skiving tool is arranged at a third distance (D3) from said axis of rotation of said work piece along the radial direction of said work piece and further such that said axis of rotation of workpiece and second axis of rotation are oriented at a second angle (α₂) relative one another;
- applying a third rotation to said second power skiving tool, said third rotation having a third rotational speed
- applying a fourth rotation to said work piece, said fourth rotation having a fourth rotational speed
wherein said third and fourth rotational speeds are synchronized and
- applying a relative movement between said work piece and said second power skiving tool along a direction parallel to said axis of rotation of said work piece, such that the cutting edges of said cutting members of the second power skiving tool engage an inner surface (23) of said work piece by means of a combined relative translational and rotational movement to machine the internal splines (24) in said inner surface along said axis of rotation of said work piece.

4. Method according to any of the preceding claims, further comprising the steps of:
- providing an additional power skiving cutting tool, said additional tool comprising a tool body and a plurality of cutting members arranged along a periphery of said tool body, each of said cutting members comprising a cutting edge, and further having an axis of rotation Rₜₐ,
- arranging said additional tool and said work piece such that a center point of said additional cutting tool is arranged at a first distance Dₐ₁ from a center point of said work piece along a radial direction of said work piece, perpendicular to said axis of rotation R_{wp} and further such that said axis of rotation Rₜₐ and said second axis of rotation are oriented at a third angle (α₃) relative one another;
- applying a fifth rotation to said additional tool, said fifth rotation having a fifth rotational speed
- applying a sixth rotation to the work piece, said sixth rotation having a sixth rotational speed,
wherein said fifth and sixth rotational speeds are synchronized and
- applying a relative movement between said work piece and said additional tool along a direction parallel to said axis of rotation of said work piece, such that the cutting members of said additional tool engage said outer surface of said work piece by means of a combined relative translational and rotational movement, thereby achieving a plurality of longitudinal tracks extending along said outer surface in a direction along said axis of rotation of said work piece.

5. Method according to any of the preceding claims, wherein at least one of said first, second and/or third angles (α, α₂, α₃) lies in the range 20-45°.

6. A cutting insert (100) adapted to be replacably arranged along a periphery of a tool body (10) of a power skiving cutting tool (1) for machining of ball tracks of an inner race of a constant velocity joint, said cutting inserts comprising:
a rake face (110);
a lower face (120) opposite to said rake face and adapted to abut an insert seat of the tool body;
a clearance surface (130) extending between the rake face and the lower face, wherein
a cutting edge (140) is formed between said rake face and said clearance surface,
wherein substantially the entire cutting edge is continuously curved describing an arc having a continuously varying radius (R) with respect to a center point (P) of said cutting insert, wherein said cutting insert (100) has an insert width extension along a first axis (A1) and an insert length extension along a second axis (A2), perpendicular to said first axis (A1), and wherein said center point (P) is positioned on the rake face (110) at half the insert length extension and half the insert width extension.

7. Cutting insert according to claim 6, wherein the insert width extension is larger than the insert length extension.

8. Cutting insert according to claim 6, wherein at least one of said insert width extension and said insert length extension lies in the range 8-50 mm, more preferably in the range 14-40 mm.

9. Cutting insert according to any of claims 6 to 8, wherein the lower face (120) comprises a plurality of grooves, wherein a first groove (121) is extending along said second axis (A2) and a second groove (122) is extending along said first axis (A1), preferably wherein the first and second groove (121, 122) extend to form an intersection coinciding with the center point of the cutting insert.

10. Cutting insert according to any of claims 6 to 9, further comprising a screw hole (150) located at the center point of the cutting insert.

11. Cutting insert according to any of claims 6-10, wherein said cutting insert is an indexable cutting insert exhibiting a 180 degree rotational symmetry.

12. A power skiving tool for machining of ball tracks of an inner race of a constant velocity joint, said power skiving tool comprising a tool body (10) and a plurality of cutting members arranged along a periphery of said tool body, wherein said cutting members comprise:
a rake face (110);
a clearance surface (130)
a cutting edge (140) formed between said rake face and said clearance surface,
wherein said cutting edge is curved describing an arc having a continuously varying radius (R) with respect to a center point (P) of said cutting member, wherein said cutting member has a width extension along a first axis (A1) and a length extension along a second axis (A2), perpendicular to said first axis (A1), and said center point (P) is positioned on the rake face at half the length extension and half the width extension of the cutting member.

13. A power skiving tool according to claim 10, wherein said cutting members are replaceable cutting inserts (100) according to any of claims 6-11.

14. Power skiving tool according to claim 12 or 13, wherein each of said members is arranged at an angle with respect to a reference plane (Pᵣ) perpendicular to the axis of rotation of the tool body, such that a plane defined by the rake face forms an angle β with the reference plane (Pᵣ), wherein the angle β lies in the range 20-55°
